# EUROPEAN PATENT APPLICATION

(11) **EP 2 476 651 A1**
(43) Date of publication of application: **18.07.2012**
(21) Application number: 10815187.9
(22) Date of filing: 20.05.2010
(51) Int. Cl.: C02F 1/44, B01D 61/06, B01D 61/58

(54) **FRESH WATER PRODUCTION METHOD AND FRESH WATER PRODUCTION DEVICE**

(30) Priority: 08.09.2009 JP 2009206824
(71) Applicant: Toray Industries, Inc., Tokyo 103-8666 (JP)
(72) Inventor: TANIGUCHI, Masahide, Otsu-shi Shiga 520-8558 (JP); TAKABATAKE, Hiroo, Otsu-shi Shiga 520-8558 (JP); OGIWARA, Wakako, Otsu-shi Shiga 520-8558 (JP)
(74) Representative: Hager, Thomas Johannes
(86) International application number: PCT/JP2010/058518
(87) International publication number: WO 2011/030589

(57) **Abstract**

An object of the present invention is to, in a pure water production apparatus that utilizes a mixture of a plurality of kinds of feed water and uses a semi-permeable membrane, effectively utilize energy of concentrate discharged from a semi-permeable membrane unit and provide, at low cost, a pure water production apparatus and method that effectively use an isobaric type energy recovery unit that can efficiently recover energy against feed water variation. For the object, in a pure water producing method by supplying and having a plurality of kinds of feed water with different water qualities permeated through a semi-permeable membrane to produce the pure water, a portion (referred to as first feed water) of the plurality of kinds of feed water supplied to a semi-permeable membrane unit comprising the semi-permeable membrane is boosted by utilizing an isobaric type energy recovery unit that recovers pressure energy of concentrate discharged from the semi-permeable membrane unit, the rest (referred to as second feed water) of the plurality of kinds of feed water is boosted by a high pressure pump, and the boosted first and second feed water are supplied together to the semi-permeable membrane unit.

## Description

### TECHNICAL FIELD

The present invention relates to a pure water production apparatus and method that are used for producing pure water from a plurality of kinds of raw water such as a combination of seawater and river water and a combination of groundwater and wastewater treated water and use a semi-permeable membrane unit. More specifically, in an apparatus which manufactures pure water from a plurality of kinds of raw water, the present invention relates to an apparatus and a method for effectively utilizing energy of concentrate discharged from the semi-permeable membrane unit.

### BACKGROUND ART

Accompanying deterioration of water environment that becomes a serious problem recently, a water treatment technology becomes more important than ever, and the water treatment technology utilizing a separation membrane has been very widely applied. As the water treatment technology for seawater desalination, previously, in the Middle East region with extremely few water resources and very rich thermal resources from oil, a thermal process has been mainly put to practical use. Meanwhile, regions other than the Middle East with not so many thermal resources employ a desalination process using a semi-permeable membrane (especially a reverse osmosis membrane) with a small energy consumption. In Caribbean islands and Mediterranean area, for example, many plants are constructed, and practical operation is performed. In desalination equipment using a reverse osmosis membrane, concentrated seawater having a pressure energy is discharged. Thus, there has been adopted a structure in which the pressure is recovered by an energy recovery unit to thereby reduce energy consumption. By virtue of the recent technical progress, reliability in a desalination technology according to a reverse osmosis membrane method is further enhanced, costs are lowered, and, in addition, an energy recovery technology is significantly improved; therefore, many reverse osmosis membrane method seawater desalination plants are constructed even in the Middle East region.

In the energy recovery, up to about ten years ago, a reverse pump that is hydraulically rotated to recover energy and a Pelton turbine in heavy usage in hydraulic power generation have been mainly used (energy recovery efficiency is 70 to 90%). Nowadays, an energy recovery unit referred to as an isobaric type is developed, and because of the high energy recovery efficiency (about 95%), the isobaric energy recovery unit is playing a major role in an energy recovery device in a seawater desalination device (Non-Patent Document 1).

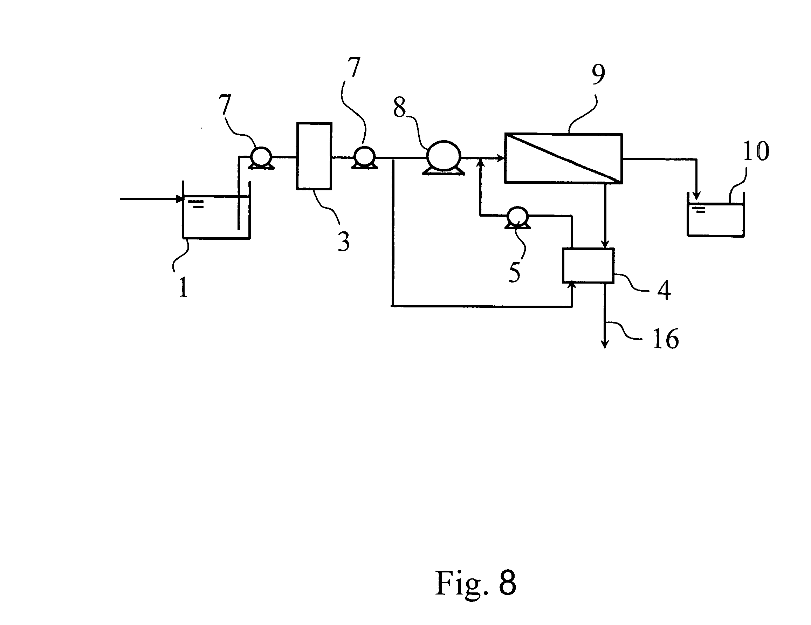

The conventional energy recovery unit using the reverse pump and the Pelton turbine is optimally-designed relative to a set flow rate, and therefore, when water amount varies, the energy recovery efficiency is reduced. However, in an isobaric type energy recovery unit, since pressure exchange between waters with the same amount is performed, it has the advantage that the energy recovery efficiency can be maintained even when a feed water amount varies. FIG. 8 shows a flow of the conventional typical pure water production apparatus comprising the isobaric type energy recovery unit.

Meanwhile, in the desalination process itself using the reverse osmosis membrane, technological developments and many improvements have been made. The reverse osmosis membrane is used for producing pure water, and pressure that can overcome osmotic pressure due to concentration difference of a membrane surface as the origin of the name is applied for the permeation of water, as a solvent, through the reverse osmosis membrane, and, thus, to manufacture pure water. Since effective pressure acting for membrane separation is obtained by subtracting the osmotic pressure based on a feed water concentration from operating pressure, there has been proposed a process in which operating pressure is increased in the middle and pure water is effectively taken against the post stage of a concentrated high osmotic pressure (Patent Document 1 and Non-Patent Document 2). Further, there has been proposed a method of treating permeate twice with the use of a nanofiltration membrane having a separation size larger than the reverse osmosis membrane and usually regarded to be unsuitable for the seawater desalination (Non-Patent Document 3). Furthermore, there has been proposed a process (FIG. 9) in which concentrated discharge water recycling wastewater is mixed into seawater to lower the osmotic pressure, and, thus, to perform reverse osmosis membrane treatment (Non-Patent Documents 4 and 5).

### PRIOR ART DOCUMENTS

### PATENT DOCUMENT

Patent Document 1: Japanese Patent Application Laid-Open No. 8-108048

### NON-PATENT DOCUMENTS

Non-Patent Document 1: G. G. Pique, "Low Power Bill makes seawater affordable", desalination & water reuse, 15 (3), p47-50 (2005)
Non-Patent Document 2: Hiroyuki Yamamura et al., "Development of Energy Saving and Low Cost Type Reverse Osmosis Membrane Method Seawater Desalination Technology", Membrane, 23(5), p245-250 (1998)
Non-Patent Document 3: R. C. Cheng, "A Novel Approach to Seawater Desalination Using Dual Dual-Staged Nanofiltration Process", AWWA Annual Conference, (2005. 6)
Non-Patent Document 4: "Four including Kobelco Eco-Solutions Co., Ltd., Model Project of METI, Demonstration Test in Shunan City", [online], March 5, 2009, Nihon Suido Simbun, [searched on July 2, 2009], Internet <URL: http://www.suido-gesuido.co.jp/blog/suido/2009/03/post-2780 .html>
Non-Patent Document 5: "Regarding Adoption of "Model Program to Discover Technology Seeds and Demonstrate Social Systems for a Low Carbon Society"", [online], March 2, 2009, Toray Industries Inc. press release, [searched on July 2, 2009], Internet <http://www.toray.co.jp/news/water/nr090302.html>

### SUMMARY OF THE INVENTION

### PROBLEMS TO BE SOLVED BY THE INVENTION

An object of the present invention is to, in a pure water production apparatus that utilizes a mixture of a plurality of kinds of feed water and uses a semi-permeable membrane, effectively utilize energy of concentrate discharged from a semi-permeable membrane unit and provide, at low cost, a pure water production apparatus and method that effectively use an isobaric type energy recovery unit that can efficiently recover energy against feed water variation.

### MEANS FOR SOLVING THE PROBLEMS

In order to achieve the above object, the present invention adopts any one of the following constitutions:
(1) a pure water producing method by supplying and having a plurality of kinds of feed water with different water qualities permeated through a semi-permeable membrane to produce the pure water, wherein: a portion (referred to as first feed water) of the plurality of kinds of feed water supplied to a semi-permeable membrane unit comprising the semi-permeable membrane is boosted by utilizing an isobaric type energy recovery unit that recovers pressure energy of concentrate discharged from the semi-permeable membrane unit, the rest (referred to as second feed water) of the plurality of kinds of feed water is boosted by a high pressure pump, and the boosted first and second feed water are supplied together to the semi-permeable membrane unit;
(2) the pure water production method according to (1), wherein the total salt concentration of the first feed water is higher than that of the second feed water;
(3) the pure water production method according to (2), wherein pressure of the first feed water before boosting is lower than pressure of the second feed water before boosting;
(4) the pure water production method according to any one of (1) to (3), wherein the first feed water and the second feed water are concentrates from a semi-permeable membrane unit different from the semi-permeable membrane unit described above;
(5) a pure water production apparatus comprising a semi-permeable membrane unit collectively treating a plurality of kinds of feed water with different water qualities and discharging permeate and concentrate, a first feed water line which supplies a portion (referred to as first feed water) of the plurality of kinds of feed water to the semi-permeable membrane unit, a second feed water line which supplies the rest (referred to as second feed water) of the plurality of kinds of feed water to the semi-permeable membrane unit, and an isobaric type energy recovery unit which recovers pressure energy of concentrate discharged from the semi-permeable membrane unit, wherein the isobaric type energy recovery unit is arranged so as to boost the first feed water with the recovered pressure energy, and the second feed water line comprises a high pressure pump boosting the second feed water;
(6) the pure water production apparatus according to (5), wherein the first feed water line comprises another semi-permeable membrane unit different from the semi-permeable membrane unit described above so that the concentrate from the another semi-permeable membrane unit is used as the first feed water, or the second feed water line comprises the another semi-permeable membrane unit so that the concentrate from the another semi-permeable membrane unit is used as the second feed water.

### EFFECTS OF THE INVENTION

According to the present invention, in a pure water production apparatus that utilizes a mixture of a plurality of kinds of feed water and comprises a semi-permeable membrane, the feed water fed to the isobaric type energy recovery unit is substantially different from the feed water not fed to the isobaric type energy recovery unit, whereby the demand for pump and piping is lowered to reduce costs, and, at the same time, a high energy recovery efficiency can be stably maintained against the feed water amount and the water quality variation. Further, effective utilization of the pressure energy of the concentrate discharged from the semi-permeable membrane unit can be facilitated.

### BRIEF DESCRIPTION OF THE DRAWINGS

FIG. 1 is a schematic flow diagram showing one embodiment of a pure water production apparatus according to the present invention;
FIG. 2 is a schematic flow diagram showing another embodiment of the pure water production apparatus according to the present invention;
FIG. 3 is a schematic flow diagram showing still another embodiment of the pure water production apparatus according to the present invention;
FIG. 4 is a schematic flow diagram showing one embodiment of a pure water production apparatus according to the present invention;
FIG. 5 is a schematic flow diagram showing another embodiment of the pure water production apparatus according to the present invention;
FIG. 6 is a schematic flow diagram showing still another embodiment of the pure water production apparatus according to the present invention;
FIG. 7 is a schematic flow diagram showing yet another embodiment of the pure water production apparatus according to the present invention;
FIG. 8 is a flow diagram of the typical conventional pure water production apparatus comprising an isobaric type energy recovery unit; and
FIG. 9 is a flow diagram of the conventional pure water production apparatus which supplies and has a mixture of different kinds of feed water treated with a semi-permeable membrane.

### BEST MODE FOR CARRYING OUT THE INVENTION

Hereinafter, preferred embodiments of the present invention will be described using the drawings. However, the scope of the invention is not limited to the embodiments.

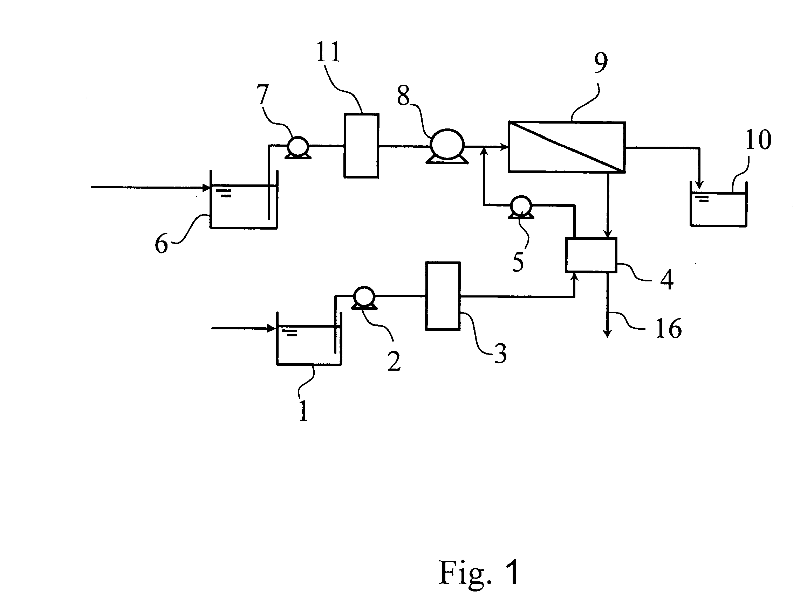

FIG. 1 shows an example of a pure water production apparatus of the present invention. The pure water production apparatus of FIG. 1 comprises a semi-permeable membrane unit 9 which treats a plurality of kinds of feed water with different water qualities and discharges concentrate and permeate, a first feed water line which supplies a portion (referred to as first feed water) of the plurality of kinds of feed water to the semi-permeable membrane unit 9, a second feed water line which supplies the rest (referred to as second feed water) of the plurality of kinds of feed water to the semi-permeable membrane unit 9, and an isobaric type energy recovery unit 4 which recovers pressure energy of the concentrate discharged from the semi-permeable membrane unit 9. The isobaric type energy recovery unit 4 is arranged to boost the first feed water with the recovered pressure energy, and the second feed water line comprises a high pressure pump 8 boosting the second feed water.

The first feed water is supplied from a first feed water tank 1 to a first pre-treatment unit 3 by a first intake pump 2, and thereafter, treated water treated by the first pre-treatment unit 3 is supplied to the isobaric type energy recovery unit 4.

Water boosted by the isobaric type energy recovery unit 4 is further boosted by a booster pump 5 to a pressure equal to the second feed water boosted by the high pressure pump 8.

Meanwhile, the second feed water is supplied from a second feed water tank 6 to a second pre-treatment unit 11 by a second intake pump 7 and treated, and then boosted by the high pressure pump 8 to a pressure substantially required for membrane treatment. The water boosted by the high pressure pump 8 is mixed with the water boosted by the isobaric type energy recovery unit 4 and the booster pump 5 to be supplied to the semi-permeable membrane unit 9.

In the semi-permeable membrane unit 9, the first feed water and the second feed water mixed and supplied are treated, and permeate and concentrate are discharged. The permeate is taken as production water 10. Meanwhile, the concentrate with pressure energy discharged from the semi-permeable membrane unit 9 is supplied to the isobaric type energy recovery unit 4 to transmit the pressure energy to the first feed water and then to be discharged as concentrated discharge water 16 outside a system.

In the present invention, as the first feed water and the second feed water, raw water with different water qualities such as salt concentration and temperature are used. Thus, piping and equipment with different characteristics according to each water quality can be arranged in the first feed water line and the second feed water line.

For example when two kinds of feed water have different salt concentrations, highly-concentrated raw water is used as the first feed water, and low-concentrated raw water is used as the second feed water, the first intake pump 2, the first pre-treatment unit 3, the booster pump 5, the isobaric type energy recovery unit 4, and a piping of the line (first feed water line) in which these components are arranged have a high level of corrosion resistance against salt. Meanwhile, equipment and piping arranged in the line of the second feed water with a low concentration have a lower corrosion resistance than the first feed water line. In this case, in the high pressure pump 8 and the second pre-treatment unit 11 in the second feed water line, for example, the material requirement level can be reduced, and therefore, the costs required for installation and maintenance can be reduced. For example, although a line of feed water with a high salt concentration is formed of a material such as duplex stainless steel with a high level of corrosion resistance, two-phase stainless steel, super austenitic stainless steel, ceramic, and glass fiber reinforced plastic, it has a drawback that these materials are expensive. However, according to the present invention, the usage of those materials can be restricted to the minimum necessary, and the cost reduction of the apparatus can be realized.

Representative examples of the highly-concentrated raw water include water with a high salt concentration such as seawater and treated water and concentrate derived from seawater. Representative examples of the low-concentrated raw water include water with a low salt concentration such as river water, groundwater, and wastewater treated water.

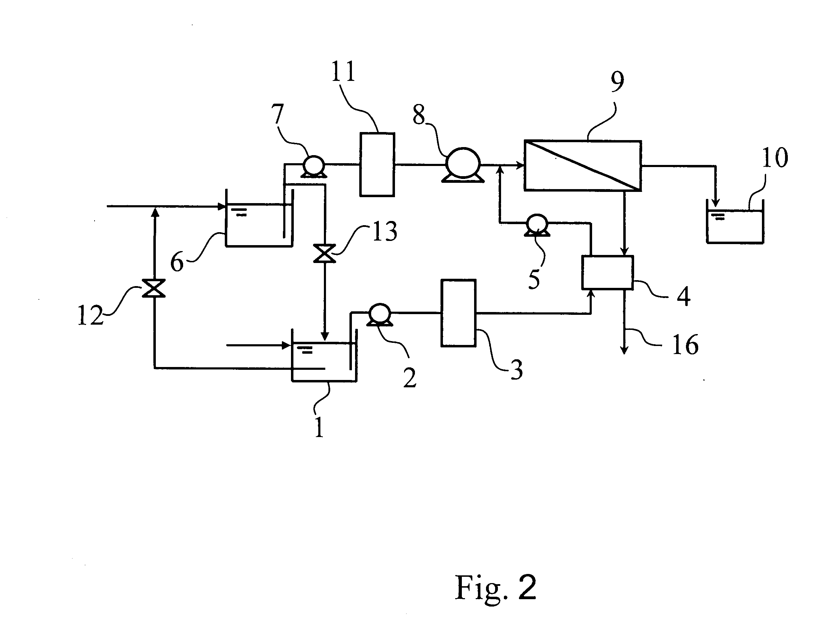

FIG. 2 shows another embodiment of the pure water production apparatus according to the present invention and shows a case where a mixture adjustment function of feed water is added. When the flow rate of each raw water is varied or restricted, it is preferable to add the mixture adjustment function as shown in FIG. 2, for example. Specifically, a piping through which the low-concentrated second feed water is supplied from the second feed water tank 6 to the first feed water tank 1 and a flow-rate adjustment valve 13 which adjusts the flow rate in the piping are provided, and it is preferable to allow the second feed water to supply to the first feed water line according to the flow rate variation of the raw water. Further, a piping through which the highly-concentrated first feed water is supplied from the first feed water tank 1 to the second feed water line and a flow-rate adjustment valve 12 which adjusts the flow rate in the piping are provided, and the first feed water may be supplied to the second feed water line according to the flow rate variation of the raw water. However, in the latter piping, the highly-concentrated first feed water is flowed to the low-concentrated second feed water line, so that the flow rate is controlled within a range in which deterioration of equipment and piping designed as the low-concentrated second feed water line is allowed. The embodiment shown in FIG. 2 is the same as the embodiment shown in FIG. 1 except the points described above.

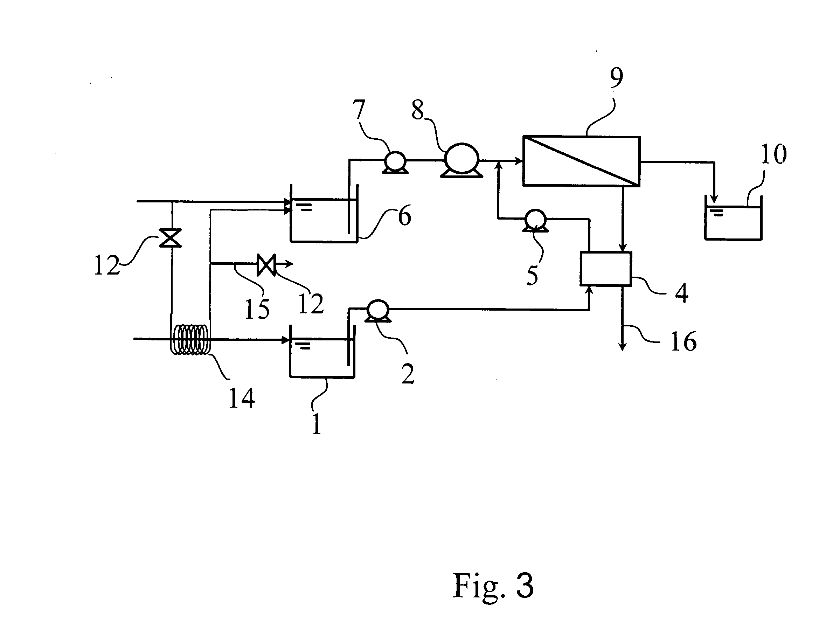

FIG. 3 shows still another embodiment of the pure water production apparatus according to the present invention and shows a case where a function of adjusting the temperature of the feed water is added. When there is a water temperature difference between the first feed water and the second feed water, and when the temperature of the second feed water is higher than the temperature of the first feed water, the temperature of the first feed water with lower temperature is increased through a heat exchange unit 14 arranged as shown in FIG. 3, and subsequent reduction in pressure drop and increase of efficiency of pre-treatment may be promoted. In this case, the total amount of the second feed water passed through the heat exchange unit 14 can be returned to the second feed water tank; or when the temperature is not desired to be lowered, a portion of or all the second feed water may be discharged outside a system through a drainage piping 15. The embodiment shown in FIG. 3 is the same as the embodiment shown in FIG. 1 except the points described above.

In the present invention, what kind of water (highly-concentrated water or low-concentrated water, for example) is supplied as the first feed water or the second feed water is not especially limited. In FIG. 1, for example, the low-concentrated raw water may be used as the first feed water, and the highly-concentrated raw water may be used as the second feed water. However, considering the following point, the feed water with a high salt concentration is preferably used as the feed water (that is, the first feed water) boosted by pressure exchange in the isobaric type energy recovery unit.

The two kinds of feed water are mixed and then treated in the semi-permeable membrane unit 9, and permeate (pure water) and concentrate having pressure energy are discharged from the semi-permeable membrane unit 9. In the concentrate discharged from the semi-permeable membrane unit 9, although the pressure energy is pressure-exchanged in the isobaric type energy recovery unit 4, several percent of the concentrate is easily leaked into the first feed water in the pressure exchange. When the highly-concentrated raw water is used as the first feed water, it is unlikely that the concentration of the first feed water is further increased even if the concentrate derived from the low-concentrated raw water is leaked into the first feed water, an adverse effect due to the leakage of the concentrate into the first feed water is reduced, and therefore, it is desirable. For example, when salt water with a total salt concentration of 3% is used as the first feed water, brine water with a total salt concentration of 1% is used as the second feed water, and the first and second feed water with an equal amount are supplied, mixed water obtained immediately before supply in the semi-permeable membrane unit has a total salt concentration of 2%. In the mixing, if 33% of the feed water permeates through the semi-permeable membrane and is obtained as pure water, the total salt concentration of the concentrate is 3%, and if the concentrate is mixed in the first feed water (with a total salt concentration of 3%) in the isobaric type energy recovery unit, no adverse effect exists. Accordingly, in terms of suppression of the adverse effects due to the leakage of the concentrate into the feed water, it is preferable that the total salt concentration of the concentrate from the semi-permeable membrane unit is not more than the total salt concentration of water boosted by utilizing the isobaric type energy recovery unit 4.

Although the total salt concentration in the present invention is represented by TDS (total dissolved solid), the total salt concentration can be obtained as the sum of various ions and single components of organic matter obtained by component analysis. However, the sum of the single components often significantly includes measurement error, and it is preferable that the sum is represented by TDS.

As another preferred embodiment of the present invention, any one of the feed water is previously subjected to a semi-permeable membrane treatment in another semi-permeable membrane unit, and the concentrate discharged from the another semi-permeable membrane treatment is preferably mixed with the other feed water and mixed to the above mentioned semi-permeable membrane unit 9.

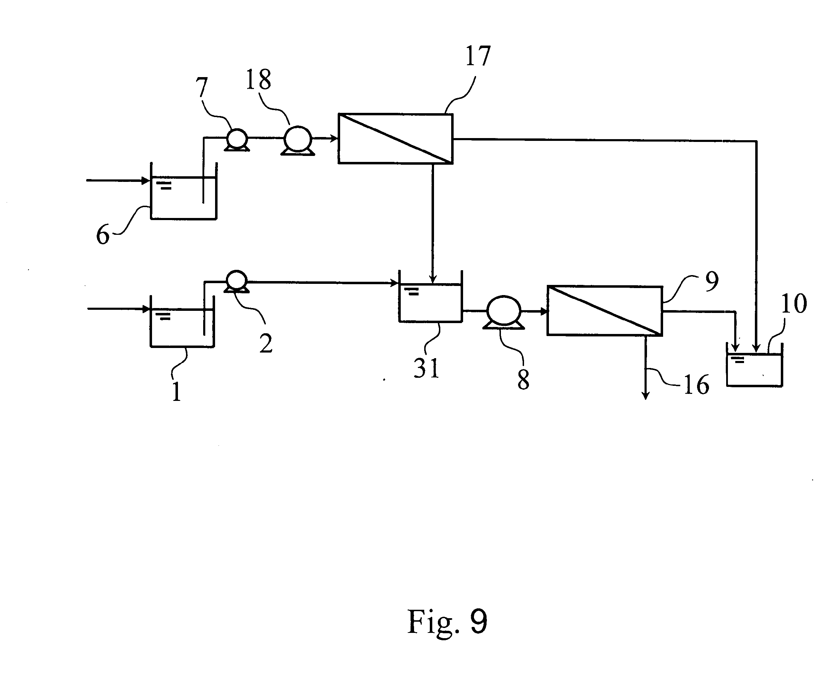

However, in the above case, a pressure standard between the concentrate obtained from the another semi-permeable membrane unit and the other feed water is different from each other. Thus, if the concentrate and the feed water are mixed by joining the respective feed pipings together(not shown) without pressure adjustment for macthing the pressure standard, there occurs a problem that the pressure variation occurs in each feed water to thereby vary a flow rate balance, and mixture fraction varies. In order to prevent the variation of the flow rate balance, it is general to install a feed water mixing tank 31 shown in FIG. 9 and mix the concentrate and the first feed water in the feed water mixing tank 31. However, in this case, the pressure energy of each feed water is lost in the mixing in the tank 31, and the pressure energy cannot be put to practical use.

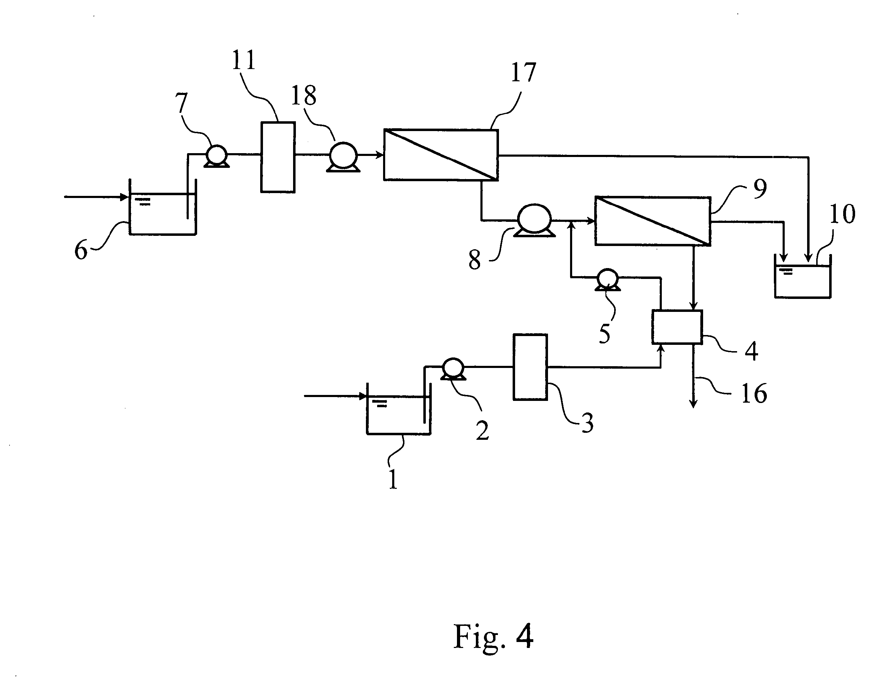

Thus, in the present invention, it is preferable that the concentrate from the another semi-permeable membrane unit is used as the second feed water, and the second feed water is mixed with the first feed water after the second feed water is boosted by the high pressure pump 8 and before the second feed water is supplied to the semi-permeable membrane unit 9. Specifically, as shown in FIG. 4, for example, it is preferable that a semi-permeable membrane unit 17 is provided upstream of the high pressure pump 8 in the second feed water line of the apparatus shown in FIG. 1, and the concentrate from the semi-permeable membrane unit 17 is used as the second feed water in the semi-permeable membrane unit 9.

According to the above constitution, each pressure standard of the feed water at the time of mixing can be adjusted by the high pressure pump 8, the booster pump 5, and the like, and the first feed water and the second feed water (the concentrate from the another semi-permeable membrane unit 17) having pressure of substantially the same standard can be joined and mixed. Since the concentrate (second feed water) in the another semi-permeable membrane unit 17 is boosted by the high pressure pump 8 while maintaining the pressure, energy loss can be suppressed. Hereinafter, in an embodiment using the two semi-permeable membrane units thus, the semi-permeable membrane unit in which the energy of the concentrate is recovered is also referred to as a "first semi-permeable membrane unit", and the semi-permeable membrane unit provided for obtaining the second feed water is also referred to as a "second semi-permeable membrane unit".

In an embodiment shown in FIG. 4, when the semi-permeable membrane unit 17 (second semi-permeable membrane unit) is used in the line on the low-concentrated feed water side among the two kinds of feed water (namely, when the low-concentrated raw water is used as the second feed water, the second feed water is supplied to the semi-permeable membrane unit 17 through the second feed water tank 6, the second intake pump 7, the second pre-treatment unit 11, and the second high pressure pump), the pressure standard of the feed water supplied to the semi-permeable membrane unit 17 may be smaller than the pressure standard of the feed water supplied to the semi-permeable membrane unit 9 (the first semi-permeable membrane unit). Thus, the pressure of the concentrate from the semi-permeable membrane unit 17 is smaller than the pressure standard of the feed water supplied to the semi-permeable membrane unit 9. Accordingly, in this case, the pressure of the concentrate from the semi-permeable membrane unit 17 is maintained as it is, the pressure is increased to a higher level to reach the pressure standard of the feed water supplied to the first semi-permeable membrane unit 9. Namely, the high pressure energy of the concentrate from the semi-permeable membrane unit 17 (the second semi-permeable membrane unit) can be effectively utilized without being lost, and the effect of preventing the pressure energy loss due to the mixing with the first feed water is large.

On the contrary, when the semi-permeable membrane unit 17 (second semi-permeable membrane unit) is used in the line on the highly-concentrated feed water side among the two kinds of feed water (namely, when the highly-concentrated raw water is used as the second feed water, and the second feed water is supplied to the semi-permeable membrane unit 17 through the second feed water tank 6, the second intake pump 7, the second pre-treatment unit 11, and the second high pressure pump), the pressure of the concentrate from the semi-permeable membrane unit 17 may be larger than the pressure standard of the feed water supplied to the semi-permeable membrane unit 9. In this case, it is necessary to lose a portion of the pressure of the concentrate from the semi-permeable membrane unit 17 and match the pressure to the pressure standard of the feed water fed to the semi-permeable membrane unit 9. Thus, the effect of preventing the pressure energy loss is not so large.

The semi-permeable membrane unit (the semi-permeable membrane units 9 and 17) applicable to the present invention is not especially limited; however, in order to facilitate handling, a fluid separation element obtained by storing a semi-permeable membrane having a hollow fiber membrane shape or a flat membrane shape in a case is preferably used in a state of being contained in a pressure-resistant container. When the fluid separation element is formed using the semi-permeable membrane having a flat membrane shape, there is generally used, for example, a fluid separation element obtained by wrapping the semi-permeable membrane and a flow path material (net) into a cylindrical shape around a tubular central pipe perforated with a large number of holes. Commercially-available products of the fluid separation element include reverse osmosis membrane element TM700 series and TM800 series from Toray Industries, inc. The semi-permeable membrane unit may be constituted of a single fluid separation element of those fluid separation elements or may be constituted of the fluid separation elements connected in series or in parallel.

The semi-permeable membrane may be formed of a polymer material such as cellulose acetate based polymer, polyamide, polyester, polyimide, and vinyl polymer. In the membrane structure, there may be used either an asymmetric membrane having a dens layer provided on at least one side of a membrane and having micro-pores with a pore size gradually increasing from the dense layer toward inside the membrane or the other side of the membrane or a composite membrane having a very thin functional layer formed of a different material on the dense layer of the asymmetric membrane.

Since the feed water is concentrated in the semi-permeable membrane unit, in order to prevent scale precipitation due to concentration or for the purpose of pH adjustment, a scale inhibitor and acid and alkali can be added to the feed water of each semi-permeable membrane unit. It is preferable that the scale inhibitor is added upstream of the pH adjustment so that the effect of addition can be exhibited. Meanwhile, it is preferable that an inline mixer is provided immediately after addition of chemicals, and an addition port is directly in contact with the flow of the feed water, whereby rapid changes of concentration and pH near the addition port is prevented.

The scale inhibitor forms a complex with metal and metal ions in a solution and solubilizes metal or metal salt, and an organic or inorganic ionic polymer or monomer can be used. As the organic polymer, a synthetic polymer such as polyacrylic acid, sulfonated polystyrene, polyacrylamide, and polyallylamine and a natural polymer such as carboxymethyl cellulose, chitosan, and alginic acid can be used. As the monomer, ethylenediaminetetraacetic acid can be used. As the inorganic scale inhibitor, polyphosphoric acid can be used. Among those scale inhibitors, in terms of availability, ease of operation such as solubility, and cost, polyphosphoric acid and ethylenediaminetetraacetic acid (EDTA) are particularly preferably used. The polyphosphoric acid is a polymerized inorganic phosphoric acid based material that has two or more phosphorous atoms in a molecule typified by sodium hexametaphosphate and is bonded to alkali metal and alkali earth metal by phosphate atoms and the like. Representative examples of polyphosphoric acid include tetrasodium pyrophosphate, disodium pyrophosphate, sodium tripolyphosphate, sodium tetrapolyphosphate, sodium heptapolyphosphate, sodium decapolyphosphate, sodium metaphosphate, sodium hexametaphosphate, and potassium salt thereof.

Meanwhile, as acid and alkali, sulfuric acid, sodium hydroxide, and calcium hydroxide are generally used. Further, hydrochloric acid, oxalic acid, potassium hydroxide, sodium bicarbonate, ammonium hydroxide, and the like can be used. However, in order to prevent increase in scale components in seawater, calcium and magnesium are discouraged from being used.

In the present invention, as a pre-treatment unit (the first pre-treatment unit 3 and the second pre-treatment unit 11) that can be installed for pretreating the feed water before being supplied to the semi-permeable membrane unit, a treatment unit that removes suspended solids and performing disinfection can be used according to the water quality of each feed water.

For example, as the pre-treatment unit used when the suspended solids in the feed water are required to be removed, the application of sand filtration, microfiltration membrane, or ultrafiltration membrane is effective. When there are many microorganisms such as bacteria and algae, a fungicide is preferably contained. Chlorine is preferably used as the fungicide, and, for example, it is preferable that chlorine gas and sodium hypochlorite as free chlorine are added to the feed water to be contained in the feed water within a range of 1 to 5 mg/l. Some specific fungicides do not have chemical resistance according to the kind of semi-permeable membrane, and therefore in this case, it is preferable to add such a fungicide on as upstream side of the feed water as possible, and, at the same time, to render the fungicide harmless near the feed water entrance side of the semi-permeable membrane unit. For example, when free chlorine is used, it is preferable to measure the concentration to control the additive amount of chlorine gas and sodium hypochlorite based on the measured value or add a reducing agent such as sodium bisulfite.

When the feed raw water contains bacteria, proteins, and natural organic components, and the like, other than suspended solids, it is effective to add a coagulant such as poly aluminum chloride, aluminium sulfate, and ferric chloride (III). The coagulated feed water is then subjected to sand filtration on coagulated matter deposited on, for example, an oblique plate or filtered through a microfiltration membrane comprising a plurality of stacked hollow fiber membranes or an ultrafiltration membrane, whereby the feed water can become one that is suitable for being passed through the post stage of the semi-permeable membrane unit. Especially in the addition of the coagulant, it is preferable to adjust pH to facilitate coagulation.

When sand filtration is applied as pretreatment, gravity filtration in which treated water spontaneously flows down or pressure filtration in which sand is filled in a pressure tank can be applied. Although sand with a single component may be used as the sand to be filled in the pressure tank, filtration efficiency can be improved by combining anthracite, silica sand, garnet, pumice, and the like.

Also for the microfiltration membrane and the ultrafiltration membrane, there is no particular limitation, a flat membrane, a hollow fiber membrane, a tubular membrane, a pleated membrane, and a membrane with any shape can be suitably used. The membrane material is not limited especially, and there can be used polyacrylonitrile, poly phenylene sulfone, polyphenylene sulfide sulfone, polyvinylidene fluoride, polypropylene, polyethylene, polysulfone, polyvinyl alcohol, cellulose acetate, and an inorganic material such as ceramic. As a membrane filtration method, there can be applied pressurized filtration in which the feed water is pressurized in filtration and suction filtration in which the transmission side is sucked in filtration. Particularly in the suction filtration, it is preferable to apply so-called coagulation filtration and membrane separation activated sludge process (MBR) in which in the filtration a microfiltration membrane or an ultrafiltration membrane is immersed in a coagulation settling tank or a biotreatment tank.

Meanwhile, when a large amount of soluble organic matter are contained in the feed water, the organic matter can be decomposed by adding chlorine gas and sodium hypochlorite; however, the organic matter can be removed by pressure flotation and activated carbon filtration. When a large amount of soluble inorganic matter are contained in the feed water, it is preferable to add a chelating agent such as organic polymer electrolyte and sodium hexametaphosphate or replace the inorganic matter with soluble ions, using an ion exchange resin and the like. When iron and manganese are present in a soluble state, it is preferable to use aerated filtration, contact aeration filtration, and the like.

Specific ions and macromolecules can be previously removed, and a nanofiltration membrane may be used for pretreatment in order to operate the pure water production apparatus in the present invention with high efficiency.

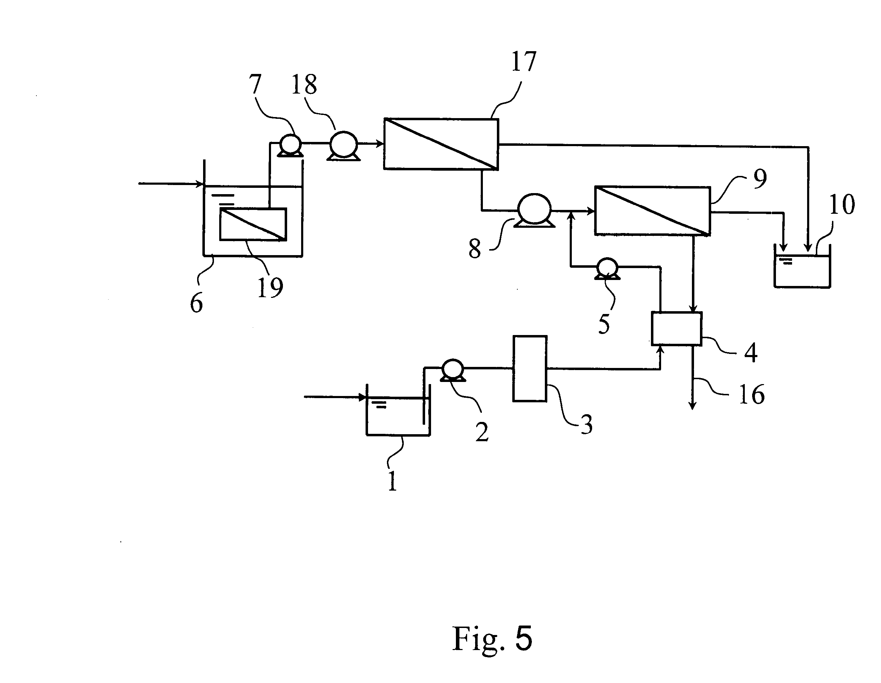

FIG. 5 is a flow diagram of a pure water production system suitably usable when the two semi-permeable membrane units are used as described above and polluted water is used as the second feed water. In the embodiment, the second feed water is subjected to membrane separation treatment in a submerged filtration unit 19 using a coagulant and an activated sludge together, and the obtained membrane filtration water is supplied to the subsequent semi-permeable membrane unit 17 (second semi-permeable membrane unit).

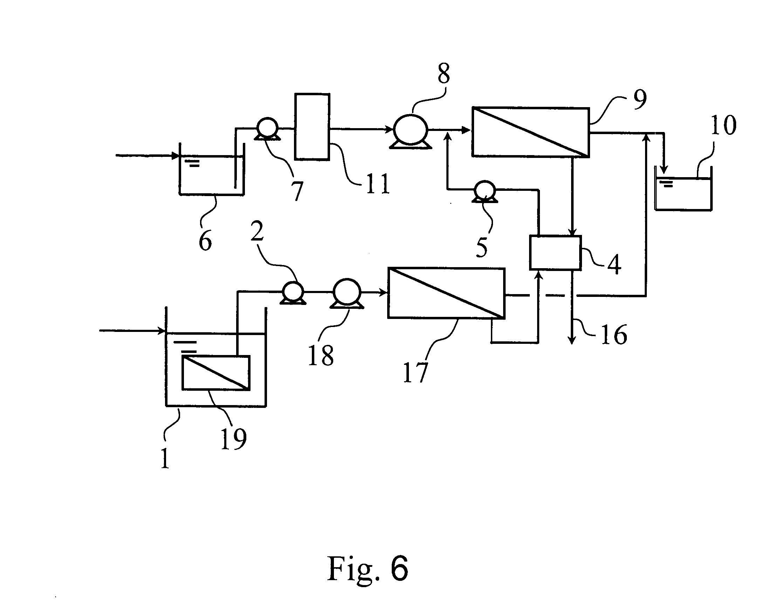

FIG. 6 shows an embodiment in which the semi-permeable membrane unit 17 (second semi-permeable membrane unit) is provided on the first feed water side, contrary to the case of FIG. 5, and it is a flow diagram of a pure water manufacuring system suitably usable when polluted water is used as the first feed water. In the embodiment, the first feed water is treated in the submerged filtration unit 19 and then treated in the semi-permeable membrane unit 17 (second semi-permeable membrane unit). This embodiment is different from the embodiment shown in FIG. 5 in that the isobaric type energy recovery apparatus is used for pressurization of the concentrate from the semi-permeable membrane unit 17.

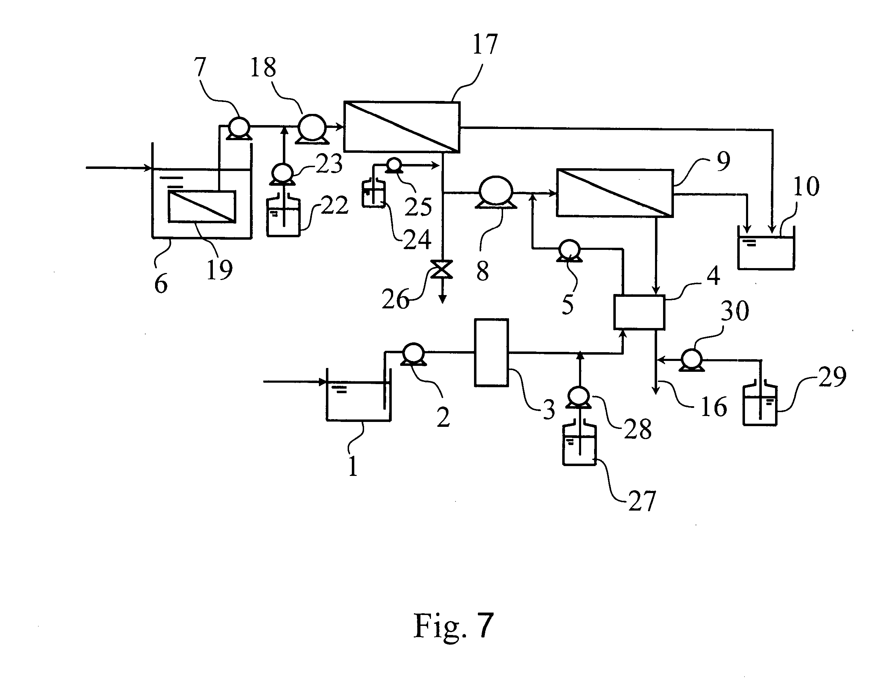

FIG. 7 exemplifies a case where chemical injection is added in the pure water production apparatus shown in FIG. 5. For example, a fungicide, a bacteriostatic, and a detergent are injected into the first feed water by a first chemical tank 27 and a feed pump 28. Further, a fungicide, a bacteriostatic, and a detergent are injected into the second feed water by a second chemical tank 22 and a feed pump 23. Those chemicals are not limited especially, and various chemicals including acid, alkali, sodium hypochlorite, chloramine, organonitrogensulphur compound, organonitrogensulphur organonitrogensulphur compound, isothiazolone compound, hydrazine compound, and DBNPA can be used if necessary.

However, the chemical-containing first feed water is treated in the semi-permeable membrane unit 9 (first semi-permeable membrane unit) and then discharged as the concentrate outside the system. Thus, if necessary, a neutralizer is injected into piping for concentrated discharge water by a first neutralization chemical tank 29 and a feed pump 30 to perform neutralization treatment of concentrated wastewater. Meanwhile, similarly in the chemical-containing second feed water, a neutralizer is injected into piping for concentrate of the semi-permeable membrane unit 17 (second semi-permeable membrane unit), supplied to the semi-permeable membrane unit 9 (first semi-permeable membrane unit) through the high pressure pump 8, by a second neutralization chemical tank 24 and a feed pump 25 to perform neutralization treatment of the concentrate. The neutralization of the concentrate at this stage is omitted, and neutralization may be collectively performed when the concentrate is discharged from the semi-permeable membrane unit 9.

### INDUSTRIAL APPLICABILITY

The present invention relates to a pure water production apparatus and method that use an isobaric type energy recovery apparatus for recovering energy of concentrated discharge water of a semi-permeable membrane. More specifically, feed water boosted by an energy recovery unit and feed water boosted by a high pressure pump without being passed through the energy recovery unit have different water qualities, whereby low-cost pure water production can be realized. Consequently, pure water can be obtained at low cost from seawater, river water, groundwater, and wastewater treated water.

### EXPLANATION OF INDICIA

1 First feed water tank
2 First intake pump
3 First pre-treatment unit
4 Isobaric type energy recovery unit
5 Booster pump
6 Second feed water tank
7 Second intake pump
8 High pressure pump
9 Semi-permeable membrane unit (first semi-permeable membrane unit)
10 Production water (pure water)
11 Second pre-treatment unit
12 Flow-rate adjustment valve
13 Flow-rate adjustment valve
14 Heat exchange unit
15 Drainage piping
16 Piping for concentrated discharge water
17 Semi-permeable membrane unit (second semi-permeable membrane unit)
18 Second high pressure pump
19 Submerged filtration unit
22 Second chemical tank
23 Second chemical feed pump
24 Second neutralization chemical tank
25 Second neutralization chemical feed pump
26 Discharge water valve
27 First chemical tank
28 First chemical feed pump
29 First neutralization chemical tank
30 First neutralization chemical feed pump
31 Feed water mixing tank

## Claims

1. A pure water producing method by supplying and having a plurality of kinds of feed water with different water qualities permeated through a semi-permeable membrane to produce the pure water, wherein: a portion (referred to as first feed water) of the plurality of kinds of feed water supplied to a semi-permeable membrane unit comprising the semi-permeable membrane is boosted by utilizing an isobaric type energy recovery unit that recovers pressure energy of concentrate discharged from the semi-permeable membrane unit, the rest (referred to as second feed water) of the plurality of kinds of feed water is boosted by a high pressure pump, and the boosted first and second feed water are supplied together to the semi-permeable membrane unit.

2. The pure water production method according to claim 1, wherein the total salt concentration of the first feed water is higher than that of the second feed water.

3. The pure water production method according to claim 2, wherein pressure of the first feed water before boosting is lower than pressure of the second feed water before boosting.

4. The pure water production method according to any claims of 1 to 3, wherein the first feed water and the second feed water are concentrates from a semi-permeable membrane unit different from the semi-permeable membrane unit described above.

5. A pure water production apparatus comprising a semi-permeable membrane unit collectively treating a plurality of kinds of feed water with different water qualities and discharging permeate and concentrate, a first feed water line which supplies a portion (referred to as first feed water) of the plurality of kinds of feed water to the semi-permeable membrane unit; a second feed water line which supplies the rest (referred to as second feed water) of the plurality of kinds of feed water to the semi-permeable membrane unit, and an isobaric type energy recovery unit which recovers pressure energy of concentrate discharged from the semi-permeable membrane unit, wherein the isobaric type energy recovery unit is arranged so as to boost the first feed water with the recovered pressure energy, and the second feed water line comprises a high pressure pump boosting the second feed water.

6. The pure water production apparatus according to claim 5, wherein the first feed water line comprises another semi-permeable membrane unit different from the semi-permeable membrane unit described above so that the concentrate from the another semi-permeable membrane unit is used as the first feed water, or the second feed water line comprises the another semi-permeable membrane unit so that the concentrate from the another semi-permeable membrane unit is used as the second feed water.
